(19) Europäisches Patentamt
European Patent Office
Office européen des brevets

(11) EP 4 741 873 A1

(12) EUROPEAN PATENT APPLICATION
published in accordance with Art. 153(4) EPC

(43) Date of publication:
13.05.2026 Bulletin 2026/20

(21) Application number: 24884042.3

(22) Date of filing: 19.07.2024

(51) International Patent Classification (IPC):
G01S 7/497 (2006.01)

(52) Cooperative Patent Classification (CPC):
G01S 7/497

(86) International application number:
PCT/CN2024/106339

(87) International publication number:
WO 2025/092034 (08.05.2025 Gazette 2025/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.10.2023 CN 202311440945

(71) Applicant: Honor Device Co., Ltd.
Shenzhen, Guangdong 518040 (CN)

(72) Inventor: LV, Jianming
Shenzhen, Guangdong 518040 (CN)

(74) Representative: Goddar, Heinz J.
Boehmert & Boehmert
Anwaltspartnerschaft mbB
Pettenkoferstrasse 22
80336 München (DE)

(54) **DEPTH COMPENSATION METHOD FOR DIRECT TIME OF FLIGHT (DTOF) SENSOR, AND ELECTRONIC DEVICE**

(57) This application is applicable to the field of computer application technologies, and provides a depth compensation method of a direct time of flight dTOF sensor and an electronic device. The method includes: in response to a trigger operation for a camera application, driving the dTOF sensor to collect raw image data; obtaining a current real drive voltage of a single-photon avalanche diode SPAD in the dTOF sensor; obtaining a current expected drive voltage of the SPAD; and performing depth compensation on the raw image data based on the real drive voltage and the expected drive voltage, to generate a target depth map. Therefore, a depth information deviation caused by a regulation error of a drive voltage of the SPAD is corrected based on a deviation between a real value and a theoretical value of the drive voltage of the SPAD, to improve accuracy of depth information collected by the dTOF sensor, thereby improving distance measurement accuracy of the dTOF sensor.

FIG. 1

## Description

This application claims priority to Chinese Patent Application No. 202311440945.0, filed with the China National Intellectual Property Administration on October 31, 2023 and entitled "DEPTH COMPENSATION METHOD OF DIRECT TIME OF FLIGHT DTOF SENSOR AND ELECTRONIC DEVICE", which is incorporated herein by reference in its entirety.

## TECHNICAL FIELD

This application pertains to the field of terminal technologies, and in particular, relates to a depth compensation method of a direct time of flight dTOF sensor, an electronic device, and a computer-readable storage medium.

## BACKGROUND

When a direct time of flight (direct time of flight, dTOF) sensor measures a distance, a drive voltage (that is, a VSPAD voltage) of a single-photon avalanche diode (single photon avalanche diodes, SPAD) needs to be dynamically regulated with a temperature change. The dTOF sensor regulates the VSPAD voltage based on an output current (that is, an IDAC current) of a current-type digital-to-analog converter (current-type digital-to-analog converter, IDAC), and different IDAC currents may correspond to different voltage regulation amplitudes.

In related technologies, when the VSPAD voltage is regulated, due to an accuracy error of the IDAC current of the dTOF sensor or an output error of a power supply, a deviation may exist between a real value obtained after the VSPAD voltage is regulated and a theoretical value. Therefore, parameters such as a dark count rate (dark-count-rate, DCR) and photon detection efficiency (photon detection efficiency, PDE) of the dTOF sensor are affected. Consequently, a deviation is generated for depth information collected by the dTOF sensor, thereby affecting distance measurement accuracy of the dTOF sensor.

## SUMMARY

Embodiments of this application provide a depth compensation method of a dTOF sensor, an electronic device, and a computer-readable storage medium, to resolve the following problem: When a VSPAD voltage is regulated, due to an accuracy error of an IDAC current of the dTOF sensor or an output error of a power supply, a deviation may exist between a real value obtained after the VSPAD voltage is regulated and a theoretical value, which causes a deviation of depth information collected by using the dTOF sensor, thereby affecting distance measurement accuracy of the dTOF sensor.

According to a first aspect, an embodiment of this application provides a depth compensation method of a dTOF sensor, including: in response to a trigger operation for a camera application, driving the dTOF sensor to collect raw image data; obtaining a current real drive voltage of a SPAD in the dTOF sensor; obtaining a current expected drive voltage of the SPAD; and performing depth compensation on the raw image data based on the real drive voltage and the expected drive voltage, to generate a target depth map.

In this way, depth compensation is performed, based on the current real drive voltage of the SPAD and the expected drive voltage, on the raw image data collected by the dTOF sensor. Therefore, a depth information deviation caused by a regulation error of a drive voltage of the SPAD is corrected based on a deviation between the real value and a theoretical value of the drive voltage of the SPAD, to improve accuracy of depth information collected by the dTOF sensor, thereby improving distance measurement accuracy of the dTOF sensor.

In a possible implementation of the first aspect, after the performing depth compensation on the raw image data based on the real drive voltage and the expected drive voltage, to generate a target depth map, the method further includes:

in a shooting process, performing focusing processing based on the target depth map.

In this way, focusing processing is performed by using the compensated target depth map in the shooting process, to improve focusing effect during shooting and improve image shooting quality, thereby further improving user experience.

Optionally, in another possible implementation of the first aspect, the raw image data includes a raw histogram and metadata corresponding to the raw histogram. Correspondingly, the performing depth compensation on the raw image data based on the real drive voltage and the expected drive voltage, to generate a target depth map includes:

generating a raw depth map based on the raw histogram; and
performing depth compensation on the raw depth map based on the real drive voltage and the expected drive voltage, to generate the target depth map.

In this way, the raw depth map is generated based on the raw histogram collected by the dTOF sensor, and depth compensation is performed on depth information in the raw depth map based on the deviation between the real drive voltage of the SPAD and the expected drive voltage, thereby further improving accuracy of depth compensation and further improving distance measurement accuracy of the dTOF.

Optionally, in still another possible implementation of the first aspect, the obtaining a current real drive voltage of a SPAD in the dTOF sensor includes:

sampling an output voltage of a power supply corresponding to the SPAD, to obtain the real drive voltage.

Optionally, in yet another possible implementation of the first aspect, the sampling an output voltage of a power supply corresponding to the SPAD, to obtain the real drive voltage includes:

when obtaining a start of frame (start of frame, SOF) interrupt sent by the dTOF sensor, creating an analog-to-digital conversion (analog-to-digital converter, ADC) read thread;
performing ADC sampling on the output voltage of the power supply by using the ADC read thread, to obtain a current ADC sampled value corresponding to the output voltage of the power supply; and
releasing the current ADC sampled value, and determining the real drive voltage based on the ADC sampled value.

In this way, each time the dTOF sensor obtains raw image data and outputs a frame, an ADC read thread is created, and ADC sampling is performed on an output voltage of a SPAD power supply by using the ADC read thread, to obtain the current real drive voltage of the SPAD, thereby improving collection accuracy of the real drive voltage, improving accuracy of depth information compensation, and further improving distance measurement accuracy of the dTOF sensor.

Optionally, in yet another possible implementation of the first aspect, the obtaining a current expected drive voltage of the SPAD includes:

performing parsing processing on the raw image data to determine a current voltage regulation level of the SPAD;
obtaining reference data corresponding to the SPAD; and
determining the expected drive voltage based on the voltage regulation level and the reference data.

Therefore, when regulating the drive voltage of the SPAD based on an IDAC current, the dTOF sensor may determine the current voltage regulation level based on the current operating temperature of the SPAD, and further perform voltage regulation based on the voltage regulation level on the basis of the pre-calibrated reference data. The dTOF sensor combines the collected raw data with the voltage regulation level during each time of distance measurement, to generate the raw image data (that is, a raw image) and output the raw image data. Therefore, parsing processing may be performed on the raw image output by the dTOF sensor, to determine the current voltage regulation level of the SPAD; and further the current expected drive voltage of the SPAD may be determined based on the voltage regulation level and the reference data, that is, a theoretical value of the current drive voltage of the SPAD, thereby ensuring accuracy of determining the theoretical value of the drive voltage of the SPAD, further improving accuracy of depth information compensation, and further improving distance measurement accuracy of the dTOF sensor.

Optionally, in another possible implementation of the first aspect, the raw image data includes a raw histogram and metadata corresponding to the raw histogram. Correspondingly, the performing parsing processing on the raw image data to determine a current voltage regulation level of the SPAD includes:

performing parsing processing on the metadata to determine the voltage regulation level.

In this way, each time the dTOF sensor collects a frame of raw image, parameters such as a temperature and a voltage regulation level when the frame of raw image is collected may be used as metadata to be combined with the collected raw histogram and then output. Therefore, the dTOF sensor may directly perform parsing processing on the metadata in the raw image, to determine a voltage regulation level corresponding to collection of the raw image, that is, determine the current voltage regulation level of the SPAD, thereby improving accuracy of depth information compensation and distance measurement accuracy of the dTOF and further reducing calculation complexity of depth compensation.

Optionally, in still another possible implementation of the first aspect, the reference data includes a reference drive voltage, a reference voltage level, and a reference voltage regulation step. Correspondingly, the determining the expected drive voltage based on the voltage regulation level and the reference data includes:

determining a current voltage regulation amplitude of the SPAD based on a difference between the voltage regulation level and the reference voltage level and the reference voltage regulation step; and
determining the expected drive voltage based on the reference drive voltage and the voltage regulation amplitude.

In this way, by pre-calibrating the reference drive voltage corresponding to the SPAD, the reference voltage level, and the reference voltage regulation step corresponding to each voltage level, the reference data for regulating the drive voltage of the SPAD is determined in advance, then an expected regulation level quantity may be determined based on a difference between a real-time voltage regulation level and the reference voltage level, a voltage amplitude that needs to be regulated is determined based on the expected regulation level quantity and the reference voltage regulation step, that is, the current voltage regulation amplitude of the SPAD, and finally voltage regulation may be performed based on the voltage regulation amplitude on the basis of the reference drive voltage to determine the current expected drive voltage of the SPAD, thereby ensuring accuracy of determining the theoretical value of the drive voltage of the SPAD, further improving accuracy of a depth step, and further improving distance measurement accuracy of the dTOF sensor.

Optionally, in yet another possible implementation of the first aspect, the performing depth compensation on the raw image data based on the real drive voltage and the expected drive voltage, to generate a target depth map includes:

determining a current drive voltage regulation error of the SPAD based on a difference between the real drive voltage and the expected drive voltage; and
performing depth compensation on the raw image data based on the drive voltage regulation error to generate the target depth map.

Optionally, in yet another possible implementation of the first aspect, the performing depth compensation on the raw image data based on the drive voltage regulation error to generate the target depth map includes:

determining, based on the drive voltage regulation error and a preset conversion ratio, a depth value error corresponding to the raw image data; and
performing depth compensation on the raw image data based on the depth value error to generate the target depth map.

In this way, the depth value error caused due to the deviation is compensated based on the deviation between the real value and the theoretical value of the drive voltage of the SPAD, thereby improving accuracy of the depth information collected by the dTOF sensor and further improving distance measurement accuracy of the dTOF sensor.

According to a second aspect, an embodiment of this application provides a depth compensation apparatus of a dTOF sensor, including: a first collection module, configured to: in response to a trigger operation for a camera application, drive the dTOF sensor to collect raw image data; a first obtaining module, configured to obtain a current real drive voltage of a SPAD in the dTOF sensor; a second obtaining module, configured to obtain a current expected drive voltage of the SPAD; and a first compensation module, configured to perform depth compensation on the raw image data based on the real drive voltage and the expected drive voltage, to generate a target depth map.

In a possible implementation of the second aspect, the apparatus further includes:
a focusing module, configured to: in a shooting process, perform focusing processing based on the target depth map.

Optionally, in another possible implementation of the second aspect, the raw image data includes a raw histogram and metadata corresponding to the raw histogram. Correspondingly, the first compensation module includes:

a first generation unit, configured to generate a raw depth map based on the raw histogram; and
a first compensation unit, configured to perform depth compensation on the raw depth map based on the real drive voltage and the expected drive voltage, to generate the target depth map.

Optionally, in still another possible implementation of the second aspect, the first obtaining module includes:
a first sampling unit, configured to sample an output voltage of a power supply corresponding to the SPAD, to obtain the real drive voltage.

Optionally, in yet another possible implementation of the second aspect, the first sampling unit is specifically configured to:

when obtaining a start of frame SOF interrupt sent by the dTOF sensor, create an ADC read thread;
perform ADC sampling on the output voltage of the power supply by using the ADC read thread, to obtain a current ADC sampled value corresponding to the output voltage of the power supply; and
release the current ADC sampled value, and determine the real drive voltage based on the ADC sampled value.

Optionally, in yet another possible implementation of the second aspect, the second obtaining module includes:

a first determining unit, configured to perform parsing processing on the raw image data to determine a current voltage regulation level of the SPAD;
a first obtaining unit, configured to obtain reference data corresponding to the SPAD; and
a second determining unit, configured to determine the expected drive voltage based on the voltage regulation level and the reference data.

Optionally, in another possible implementation of the second aspect, the raw image data includes a raw histogram and metadata corresponding to the raw histogram. Correspondingly, the first determining unit is specifically configured to:

perform parsing processing on the metadata to determine the voltage regulation level.

Optionally, in still another possible implementation of the second aspect, the reference data includes a reference drive voltage, a reference voltage level, and a reference voltage regulation step. Correspondingly, the second determining unit is specifically configured to:

determine a current voltage regulation amplitude of the SPAD based on a difference between the voltage regulation level and the reference voltage level and the reference voltage regulation step; and
determine the expected drive voltage based on the reference drive voltage and the voltage regulation amplitude.

Optionally, in yet another possible implementation of the second aspect, the first compensation module further includes:

a third determining unit, configured to determine a current drive voltage regulation error of the SPAD based on a difference between the real drive voltage and the expected drive voltage; and
a second compensation unit, configured to perform depth compensation on the raw image data based on the drive voltage regulation error to generate the target depth map.

Optionally, in yet another possible implementation of the second aspect, the second compensation unit is specifically configured to:

determine, based on the drive voltage regulation error and a preset conversion ratio, a depth value error corresponding to the raw image data; and
perform depth compensation on the raw image data based on the depth value error to generate the target depth map.

According to a third aspect, an embodiment of this application provides an electronic device, including: a memory, a processor, and a computer program that is stored in the memory and that can run on the processor. When the processor executes the computer program, the electronic device implements the depth compensation method of the dTOF sensor.

According to a fourth aspect, an embodiment of this application provides a computer-readable storage medium. The computer-readable storage medium stores a computer program. When the computer program is executed by an electronic device, the depth compensation method of the dTOF sensor is implemented.

According to a fifth aspect, an embodiment of this application provides a computer program product. When the computer program product is run on an electronic device, the electronic device is enabled to perform the depth compensation method of the dTOF sensor.

Technical effects obtained through the foregoing second aspect, third aspect, fourth aspect, and fifth aspect are similar to the technical effect obtained through the corresponding technical means in the foregoing first aspect. Details are not described herein again.

## BRIEF DESCRIPTION OF DRAWINGS

To describe technical solutions in embodiments of this application or in the conventional technology more clearly, the following briefly describes the accompanying drawings required for describing embodiments or the conventional technology. Apparently, the accompanying drawings in the following description show merely some embodiments of this application, and persons of ordinary skill in the art may still derive other drawings from these accompanying drawings without creative efforts.

FIG. 1 is a diagram of an architecture of a software system of an electronic device according to an embodiment of this application;
FIG. 2 is a schematic flowchart of a depth compensation method of a dTOF sensor according to an embodiment of this application;
FIG. 3 is a diagram of a home screen of an electronic device according to an embodiment of this application;
FIG. 4 is a diagram of a camera preview interface of an electronic device according to an embodiment of this application;
FIG. 5 is a diagram of another camera preview interface of an electronic device according to an embodiment of this application;
FIG. 6 is a diagram of a recording interface of an electronic device according to an embodiment of this application;

FIG. 7 is a diagram of a structure of a raw image collected by a dTOF sensor according to an embodiment of this application;

FIG. 8 is a block diagram of technologies of a depth compensation method of a dTOF sensor according to an embodiment of this application;

FIG. 9 is a diagram of a relationship between a drive voltage of a SPAD and a voltage regulation level according to an embodiment of this application;

FIG. 10 is a time-sequence diagram of a depth compensation method of a dTOF sensor according to an embodiment of this application;

FIG. 11 is a diagram of a structure of a depth compensation apparatus of a dTOF sensor according to an embodiment of this application; and

FIG. 12 is a diagram of a structure of an electronic device according to an embodiment of this application.

## DESCRIPTION OF EMBODIMENTS

Before the method provided in embodiments of this application is described, a software system of an electronic device in embodiments of this application is described.

The software system of the electronic device may be of a layered architecture, an event-driven architecture, a microkernel architecture, a micro service architecture, or a cloud architecture. In embodiments of this application, the software system of the electronic device is described by using an Android (Android) system with a layered architecture as an example.

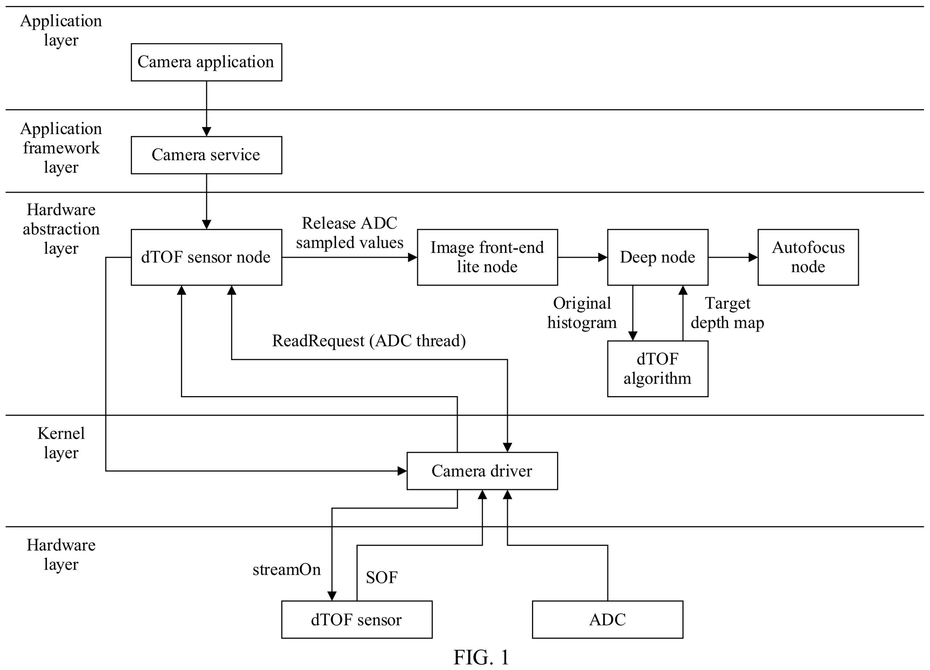

FIG. 1 is a block diagram of a software system of an electronic device according to an embodiment of this application. As shown in FIG. 1, in a layered architecture, software is divided into several layers, and each layer has a clear role and task. Layers communicate with each other through a software interface. In some embodiments, the Android system is divided into four layers from top to bottom: an application layer, an application framework layer (framework), a hardware abstraction layer (HAL), and a kernel layer (kernel). In addition, FIG. 1 further shows a relationship between a hardware layer and the software system. As an example of this application, the hardware layer includes a dTOF sensor and an ADC. The dTOF sensor is configured to collect image data. The ADC is configured to sample a VSPAD voltage to determine a real value of the VSPAD voltage, that is, a real drive voltage of a SPAD.

The application layer may include a series of application program packages. As shown in FIG. 1, the application program packages may include a camera application. In addition, the application program packages may further include applications such as instant messaging, Phone, Gallery, Map, Navigation, WLAN, Bluetooth, Music, Videos, and Messages. Details are not described in embodiments of this application.

The application framework layer provides an application programming interface (application programming interface, API) and a programming framework for an application at the application layer. The application framework layer includes some predefined functions. As an example of this application, as shown in FIG. 1, the application framework layer may include a camera service (CameraService). The camera service is used to: monitor whether the camera application is triggered to collect an image, and when the camera application is triggered to collect an image, indicate, by using the hardware abstraction layer and the kernel layer, the dTOF sensor of the hardware layer to collect the image. There may be a dTOF sensor node, an image front-end lite node (IFE lite node), a depth node (depth node), an autofocus node (AF node), and a dTOF algorithm.

The kernel layer is a layer between hardware and software. As an example, as shown in FIG. 1, the kernel layer may include a camera driver (Camera Driver). In addition, the kernel layer may further at least include a display driver, an audio driver, a sensor driver, and the like. This is not limited in this embodiment of this application.

In this embodiment of this application, as an example, a process of interaction between the software system and the hardware layer in this embodiment of this application and a process of interaction between the layers of the software system are as follows: When the camera application is triggered (for example, a trigger operation performed by a user on an icon of the camera application or a trigger operation performed on a shooting control is obtained), the camera application of the application layer sends an instruction to the camera service of the application framework layer, then the camera service sends the instruction to the dTOF sensor node of the hardware abstraction layer, and further the dTOF sensor node sends the instruction to the camera driver of the kernel layer, so that the camera driver streams on (streamOn) to the dTOF sensor of the hardware layer, to drive the dTOF sensor to collect raw image data. Then, when collecting a frame of raw image data and outputting the frame, the dTOF sensor sends a SOF interrupt and the raw image data to the camera driver. The camera driver sends the SOF interrupt to the dTOF sensor node. When receiving the SOF interrupt, the dTOF sensor node creates an ADC thread by using ReadRequest, to sample the VSPAD voltage in the ADC thread by using the camera driver to drive the ADC at the hardware layer, thereby obtaining a current ADC sampled value of the SPAD; and the dTOF sensor obtains the collected current ADC sampled value of the SPAD in the ADC thread by using the camera driver. Then, the dTOF sensor node releases the ADC sampled value and the raw image data that are received from the camera driver to the depth node by using the image front-end lite node. Further, the depth node sends the received ADC sampled value and the raw image data to the dTOF algorithm. Finally, the dTOF algorithm determines the current real drive voltage of the SPAD based on the ADC sampled value, performs parsing processing on the raw image data to determine the current expected drive voltage of the SPAD, generates a raw depth map based on the raw image data, and further performs depth compensation on the raw depth map based on the current real drive voltage and the expected drive voltage of the SPAD to generate a target depth map. Then, the target depth map is sent to the depth node, and the depth node sends the target depth map to the autofocus node, so that the target depth map is used for autofocus.

With reference to the accompanying drawings, the following describes in detail a depth compensation method and apparatus of a dTOF sensor, an electronic device, a storage medium, and a computer program according to this application.

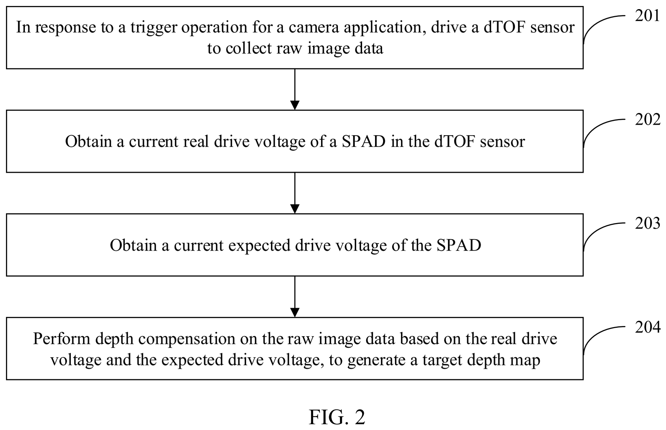

Based on the electronic device shown in FIG. 1, the following describes the depth compensation method of the dTOF sensor according to an embodiment of this application. With reference to FIG. 2, FIG. 2 is a schematic flowchart of a depth compensation method of a dTOF sensor according to an embodiment of this application. As an example instead of a limitation, the method may be executed by the electronic device shown in FIG. 1. The electronic device is implemented through interaction between the foregoing modules. The method may include a part or all of the following content:

Step 201: In response to a trigger operation for a camera application, drive the dTOF sensor to collect raw image data.

In a process of using the electronic device, in some application scenarios, a user needs the electronic device to automatically detect a distance between a target object and the electronic device in a detection sensing area of the electronic device and control some components of the electronic device or perform some functions based on the distance. For example, in a shooting scenario, the electronic device may perform autofocus processing based on the distance between the target object and the electronic device. In this way, distance measurement needs to be performed by using a distance measurement sensor in the electronic device, and autofocus processing is performed based on a distance measurement result. As an example, the distance measurement sensor in the electronic device may be the dTOF sensor. The depth compensation method of the dTOF sensor in this embodiment of this application may be applied to a camera focusing scenario, or may be applied to any scenario of distance measurement performed by the dTOF sensor. This is not limited in this embodiment of this application. In addition, the dTOF sensor in this embodiment of this application may be a distance measurement sensor or an image sensor, so that distance measurement can be performed and image collection can also be performed.

It needs to be noted that the depth compensation method of the dTOF sensor provided in embodiments of this application may be further applied to an electronic device such as a mobile phone, an action camera (GoPro), a digital camera, a tablet computer, a desktop computer, a laptop computer, a handheld computer, a notebook computer, an in-vehicle device, an ultra-mobile personal computer (ultra-mobile personal computer, UMPC), a netbook, a cellular phone, a personal digital assistant (personal digital assistant, PDA), an augmented reality (augmented reality, AR) device/a virtual reality (virtual reality, VR) device, a wearable device (for example, a wearable smart band), and a smart household device (for example, a smart refrigerator and a smart television). This is not specially limited in embodiments of this application.

The first operation may be any operation that is input by the user to the electronic device and that may trigger the autofocus function.

For example, autofocus is usually performed in a preview process. Therefore, the trigger operation may be any operation that may trigger display of a camera preview interface. For example, the trigger operation may be triggering a camera application icon in a home screen of the electronic device, triggering a shutter control in a camera running interface, triggering a recording end control in a camera recording process, or triggering a recording pause control in a camera recording process. For another example, it is assumed that autofocus may also be performed in a camera recording process, the trigger operation may alternatively be triggering a recording control in a camera running interface. Alternatively, in a preview or recording process, refocusing is triggered if a target object in a field of view changes, and the trigger operation may be that the target object in the field of view changes.

It should be noted that the foregoing examples are merely exemplary, and cannot be considered as a limitation on this application. In actual use, a type of the trigger operation may be related to functions of the electronic device and the camera application. Therefore, any operation that can trigger autofocus may be set as the trigger operation in embodiments of this application according to an actual requirement and a specific application scenario. This is not limited in embodiments of this application.

The raw image data may be a raw image collected by the dTOF sensor.

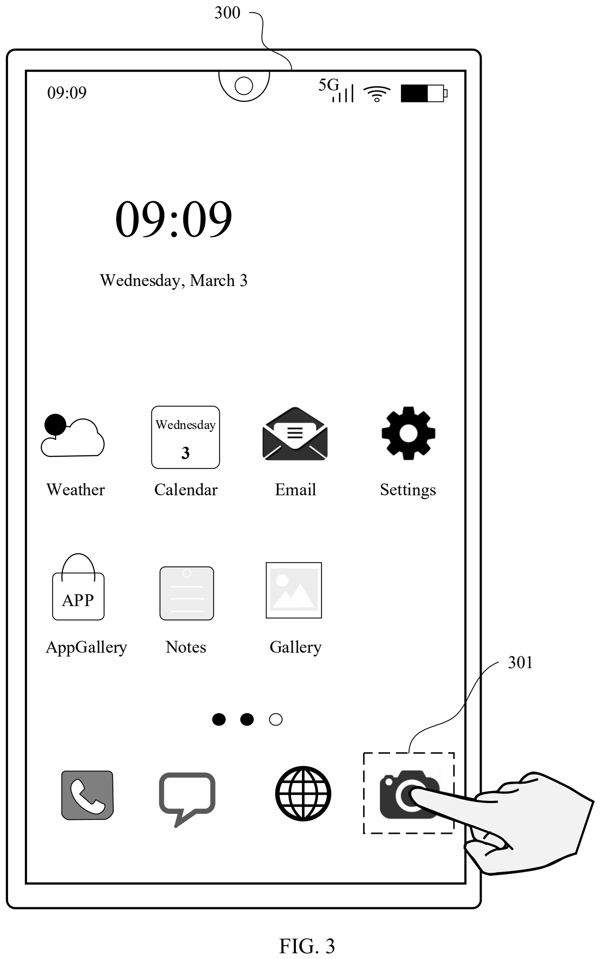

In a possible implementation, as shown in FIG. 3, a home screen 300 of the electronic device displays a page with application icons. The page may include a plurality of application icons (for example, a Weather application icon, a Calendar application icon, a Gallery application icon, a Notes application icon, an Email application icon, an AppGallery icon, and a Settings application icon). A page indicator may also be displayed below the plurality of application icons, to indicate a position relationship between a currently displayed page and another page. There are a plurality of application icons (for example, a camera application icon 301, a browser application icon, an information application icon, a phone application icon) below the page indicator. These application icons remain displayed during page switching. It may be understood that the camera application icon 301 is an icon of a camera application (that is, a camera app). The camera application icon 301 may be used to trigger to start the camera application.

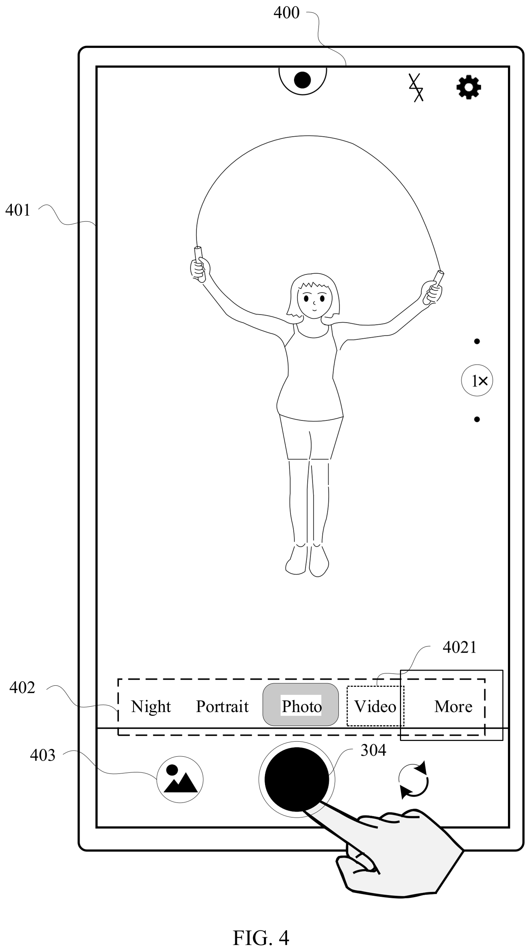

The electronic device may detect a trigger operation performed on the camera application icon 301. In response to the trigger operation, the electronic device may display a camera preview interface 400 shown in FIG. 4. The camera preview interface 400 is a shooting interface in a default shooting mode of the camera application. A user may preview an image on the interface and complete shooting. In addition, an autofocus process may be further performed in a process of displaying the camera preview interface 400.

As shown in FIG. 4, the camera preview interface 400 may include a preview window 401, a camera mode option 402, a gallery shortcut control 403, a shutter control 404, and a camera lens flipping control.

The preview window 401 may be used to display a preview image. The preview image displayed in the preview window 401 is a raw image captured by a camera lens of the electronic device based on a framing range.

One or more shooting mode options may be displayed in the camera mode option 402. The one or more shooting mode options may include a night mode option, a smart portrait mode option, a photo mode option, a video mode option 4021, and a more option. It may be understood that the camera mode option 402 may include more or fewer shooting mode options.

The gallery shortcut control 403 may be used to open a gallery application. After the user triggers, by using the gallery shortcut control 403, the electronic device to open the gallery application, the user may view an image and a video obtained through shooting. In addition, a thumbnail of the image or video obtained through shooting may be further displayed on the gallery shortcut control 403.

In a possible implementation, the shutter control 404 may be used to trigger the camera lens to capture an image and complete a shooting operation. The electronic device may automatically return to display the camera preview interface 400 after obtaining a trigger operation performed by the user on the shutter control 404 and completing shooting.

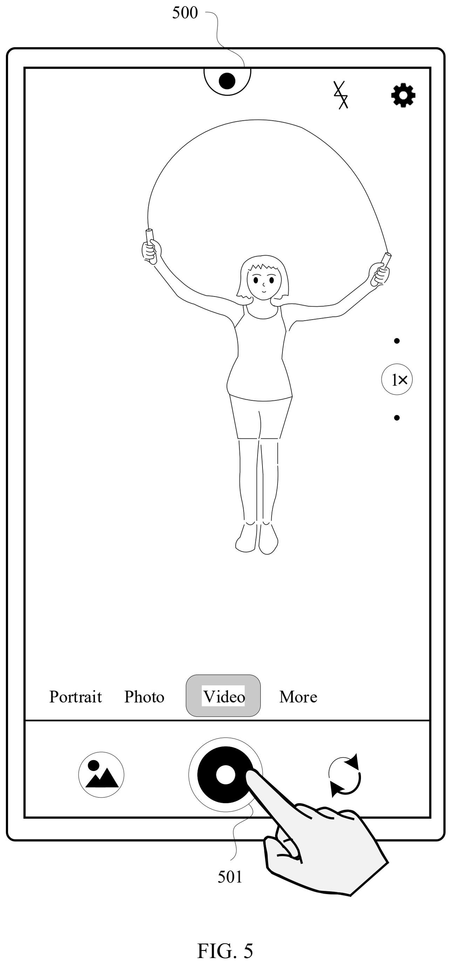

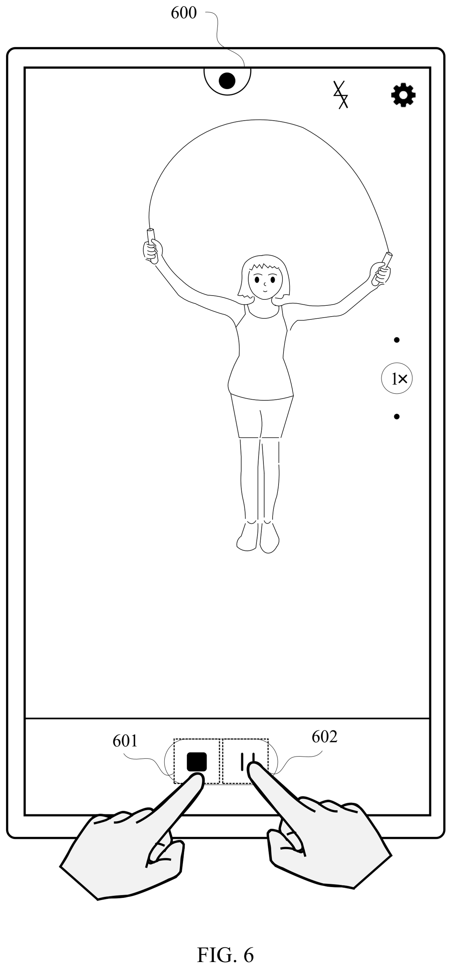

In a possible implementation, the video mode option 4021 may be triggered to enter a video mode and display a camera preview interface 500 (a video preview interface) shown in FIG. 5. A control included in the camera preview interface 500 is approximately the same as a control included in the camera preview interface 400. A difference is that the camera preview interface 500 may further include a video recording start control 501. The video recording start control 501 is used to trigger the electronic device to start video recording. The electronic device may display a recording interface 600 shown in FIG. 6 after obtaining a trigger operation performed by the user on the video recording start control 501. The recording interface 600 includes a recording end control 601 and a recording pause control 602. The recording end control 601 may be used to end recording, and the recording pause control 602 may be used to pause recording. After obtaining a trigger operation performed by the user on the recording end control 601, the electronic device may end recording and display the camera preview interface 500 shown in FIG. 5. After obtaining a trigger operation performed by the user on the recording pause control 602, the electronic device may pause recording and display the camera preview interface.

It may be understood that the trigger operation mentioned in this embodiment of this application may include, but is not limited to, a touch (for example, a tap), voice control, a gesture, or the like. This is not limited in this application.

In this embodiment of this application, after the trigger operation performed by the user on the camera application is obtained, it may be determined that there is currently a distance measurement or focusing requirement. In this way, the dTOF sensor can be driven to transmit an optical pulse, receive echo data corresponding to the transmitted optical pulse, and further generate raw image data, that is, a raw image, based on the echo data.

In a possible implementation, the raw image data may include a raw histogram and metadata (metadata) corresponding to the raw histogram. The raw histogram may be a histogram generated based on the echo data received by a SPAD in the dTOF sensor, and may be used for calculating a distance between the electronic device and a measured object. The metadata may include parameter information of the dTOF sensor when the frame of raw image data is collected, for example, an operating temperature during collection and a voltage regulation level corresponding to the SPAD.

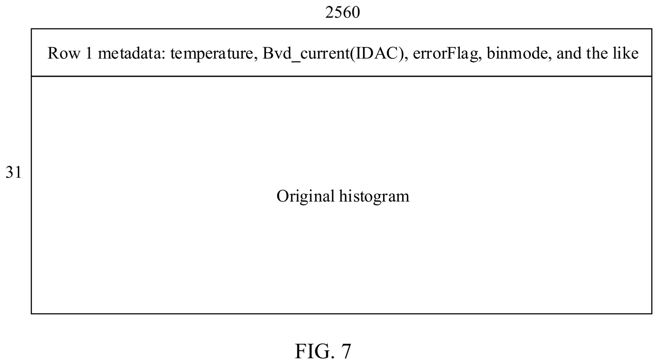

As an example, FIG. 7 is a diagram of a structure of a raw image collected by a dTOF sensor according to an embodiment of this application. A size of the raw image is $31 \times 2560$, the 1st row is metadata, and the 2nd to 31st rows are a raw histogram. The metadata may include parameter information such as an operating temperature when the frame of raw image is collected, a voltage regulation level (Bvd_current (IDAC)) corresponding to the SPAD, an error flag (errorFlag), and binmode.

It should be noted that the foregoing examples are merely exemplary, and cannot be considered as a limitation on this application. In actual use, a data structure of the raw image collected by the dTOF sensor and the parameter information included in the metadata may be determined based on an actual requirement and a specific application scenario. This is not limited in this embodiment of this application.

Step 202: Obtain a current real drive voltage of the SPAD in the dTOF sensor.

The SPAD is an avalanche photodiode with a single-photon detection capability, and has a characteristic of high sensitivity. When an operating voltage is higher than an avalanche breakdown voltage of the SPAD, the SPAD operates in a Geiger mode. In other words, when a photon comes, avalanche effect (avalanche) of the SPAD is triggered. Due to a high reverse biased electric field in the SPAD, a small quantity of electrons generated in photon conversion cause the SPAD to generate an avalanche state. In this case, a photoelectric conversion gain is theoretically infinite, and a digital signal that can be captured by a time to digital converter (time to digital converter, TDC) is generated. In this case, this is considered that a photon comes, to detect an echo corresponding to the transmitted optical pulse.

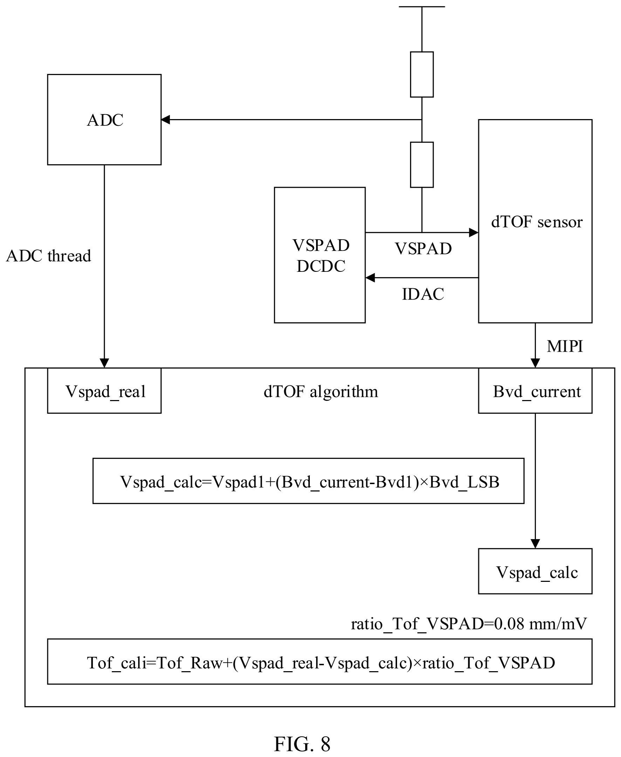

It should be noted that, when the dTOF sensor performs distance measurement, the drive voltage of the SPAD needs to be dynamically adjusted as a temperature changes. FIG. 8 is a block diagram of technologies of a depth compensation method of a dTOF sensor according to an embodiment of this application. A power supply of a SPAD may be a direct current (direct current, DC) to direct current power supply (DCDC power supply). The dTOF sensor regulates a drive voltage of the SPAD by using an IDAC current, that is, regulates an output voltage VSPAD of the DCDC power supply. For example, a voltage regulation step corresponding to each IDAC level is 128 mV. If the SPAD requires a higher voltage due to a temperature rise, for example, six levels need to be added, that is, the VSPAD voltage needs to be increased by 768 mV in total. Due to an accuracy error of the IDAC current of the dTOF sensor or an output error of the DCDC power supply, the VSPAD voltage is finally increased by only 668 mV. Therefore, a difference of 100 mV affects parameters such as DCR and PDE of the dTOF sensor, and further affects the depth information collected by the dTOF sensor. For example, specific impact of a regulation error of the VSPAD voltage on the depth information may be 0.08 mm/mV, that is, a regulation error of 100 mV causes a deviation of about 8 mm of the depth information. Therefore, in this embodiment of this application, specific compensation may be performed, based on a difference between a real value and a theoretical value of the drive voltage of the SPAD, on the depth information deviation caused due to the regulation error, to improve accuracy of the depth information collected by the dTOF sensor and distance measurement accuracy of the dTOF sensor.

The real drive voltage may be a drive voltage corresponding to the SPAD when the dTOF sensor collects the raw image data.

In a possible implementation, after the dTOF sensor collects and outputs the raw image data, that is, after each time the dTOF sensor outputs a frame, the dTOF sensor collects the output voltage of the power supply corresponding to the SPAD, and determines the collected output voltage of the power supply as the current real drive voltage of the SPAD.

Further, because the output voltage VSPAD of the power supply corresponding to the SPAD is a continuous analog signal, the real drive voltage may be obtained in a sampling manner, and a real instantaneous value of the VSPAD voltage is used as the current real drive voltage of the SPAD, to improve accuracy of the real voltage value of the SPAD. In other words, in a possible implementation of this embodiment of this application, step 202 may include:
sampling an output voltage of a power supply corresponding to the SPAD, to obtain the real drive voltage.

In this embodiment of this application, after collecting the raw image data and outputting the frame, the dTOF sensor may immediately sample the output voltage of the power supply corresponding to the SPAD, and determine a sampled value as the real drive voltage.

Further, the current real drive voltage of the SPAD may be obtained in an ADC sampling manner. After the dTOF sensor outputs the frame, an independent thread may be created to collect and obtain an ADC sampled value, to determine the current real drive voltage of the SPAD based on the ADC sampled value, thereby further improving accuracy of the real voltage value of the SPAD and further improving accuracy of depth compensation of the dTOF sensor. In other words, in a possible implementation of this embodiment of this application, step 202 may include:

when obtaining a start of frame SOF interrupt sent by the dTOF sensor, creating an ADC read thread;
performing ADC sampling on the output voltage of the power supply by using the ADC read thread, to obtain a current ADC sampled value corresponding to the output voltage of the power supply; and
releasing the current ADC sampled value, and determining the real drive voltage based on the ADC sampled value.

In a possible implementation, in a native architecture of the software system of the electronic device, there is no thread or channel for collecting the output voltage of the power supply corresponding to the SPAD. Therefore, as shown in FIG. 1, after the dTOF sensor collects the raw image data and outputs the frame, the dTOF sensor may send a SOF interrupt to the camera driver, and send the SOF interrupt to the dTOF sensor node by using the camera driver, to indicate the dTOF sensor to create an independent ADC thread by using ReadRequest and perform ADC sampling (as shown in FIG. 8) on the output voltage VSPAD of the power supply by driving the ADC by using the camera driver in the ADC thread. Further, the current ADC sampled value corresponding to the collected output voltage of the power supply is returned to the dTOF sensor node by using the ADC thread. Then, the dTOF sensor node releases the obtained current ADC sampled value to the depth node. Finally, the depth node sends the ADC sampled value to the dTOF algorithm, so that the dTOF algorithm determines the current real drive voltage of the SPAD based on the current ADC sampled value. For example, the current ADC sampled value may be determined as the current real drive voltage of the SPAD. As shown in FIG. 8, after obtaining the current sampled value from the ADC by using the ADC thread, the dTOF algorithm determines the real drive voltage Vspad_real based on the current sampled value.

Through the foregoing analysis, in this embodiment of this application, each time the dTOF sensor obtains the raw image data and outputs the frame, the ADC read thread is created, and ADC sampling is performed on the output voltage of the SPAD power supply by using the ADC read thread, to obtain the current real drive voltage of the SPAD, thereby improving collection accuracy of the real drive voltage, improving accuracy of depth information compensation, and further improving distance measurement accuracy of the dTOF sensor.

Step 203: Obtain a current expected drive voltage of the SPAD.

The expected drive voltage may be a theoretical value of the SPAD drive voltage determined based on the current operating temperature.

In a possible implementation, the dTOF sensor may regulate the drive voltage of the SPAD based on a real-time operating temperature, and may store the expected drive voltage in the currently collected raw image data after determining the current expected drive voltage of the SPAD based on the current operating temperature. Therefore, parsing processing may be performed on the raw image data collected by the dTOF sensor, to determine the current expected drive voltage of the SPAD.

Further, the dTOF sensor may regulate the drive voltage of the SPAD based on IDAC current levels (different IDAC current levels correspond to different voltage regulation levels). To be specific, the dTOF sensor may determine, based on the current operating temperature, the IDAC current level corresponding to the operating temperature, and then the power supply may regulate the output voltage based on the IDAC current level received from the dTOF sensor, that is, regulate the drive voltage of the SPAD. Therefore, the raw data collected by the dTOF sensor may include the IDAC current level. In other words, in a possible implementation of this embodiment of this application, step 203 may include:

performing parsing processing on the raw image data to determine a current voltage regulation level of the SPAD;
obtaining reference data corresponding to the SPAD; and
determining the expected drive voltage based on the voltage regulation level and the reference data.

The voltage regulation level may be an IDAC current level currently used for regulating the drive voltage of the SPAD.

The reference data corresponding to the SPAD may be a reference value that is used for regulating the drive voltage of the SPAD and that is determined by performing calibration on the electronic device on a production line. In other words, when the drive voltage of the SPAD is regulated, the drive voltage of the SPAD may be regulated based on the reference data corresponding to the SPAD.

In a possible implementation, when the dTOF sensor regulates the drive voltage of the SPAD based on the IDAC current level, the current IDAC current level may be stored as the current voltage regulation level in the currently collected raw image data, so that parsing processing can be performed on the raw image data collected by the dTOF sensor, to determine the current voltage regulation level of the SPAD. After the current voltage regulation level of the SPAD is determined, the expected drive voltage corresponding to the current voltage regulation level may be calculated based on the pre-calibrated reference data.

Therefore, when regulating the drive voltage of the SPAD based on an IDAC current, the dTOF sensor may determine the current voltage regulation level based on the current operating temperature of the SPAD, and further perform voltage regulation based on the voltage regulation level on the basis of the pre-calibrated reference data. The dTOF sensor combines the collected raw data with the voltage regulation level during each time of distance measurement, to generate the raw image data (that is, a raw image) and output the raw image data. Therefore, parsing processing may be performed on the raw image output by the dTOF sensor, to determine the current voltage regulation level of the SPAD; and further the current expected drive voltage of the SPAD may be determined based on the voltage regulation level and the reference data, that is, the theoretical value of the current drive voltage of the SPAD, thereby ensuring accuracy of determining the theoretical value of the drive voltage of the SPAD, further improving accuracy of depth information compensation, and further improving distance measurement accuracy of the dTOF sensor.

Further, when the raw image data includes a raw histogram and metadata corresponding to the raw histogram, parameter information such as an operating temperature and a voltage regulation level that are used during collection of the raw image data may be stored in the metadata. In other words, in a possible implementation of this embodiment of this application, the raw image data may include the raw histogram and the metadata corresponding to the raw histogram. Correspondingly, the performing parsing processing on the raw image data to determine the current voltage regulation level of the SPAD may include:

performing parsing processing on the metadata to determine the voltage regulation level.

In a possible implementation, each time the dTOF sensor collects a frame of raw image data (that is, a raw image), parameters such as an operating temperature and a voltage regulation level when the frame of raw image is collected may be used as metadata to be combined with the collected raw histogram and then output. Therefore, the dTOF sensor may directly perform parsing processing on the metadata in the raw image, to determine a voltage regulation level corresponding to collection of the raw image, that is, determine the current voltage regulation level of the SPAD, thereby improving accuracy of depth information compensation and distance measurement accuracy of the dTOF and further reducing calculation complexity of depth compensation.

As an example, as shown in FIG. 1, after the raw image is collected by the dTOF sensor at the hardware layer, the raw image may be transmitted to the dTOF algorithm through the camera driver in the kernel layer, the sensor node in the hardware abstraction layer, the image front-end lite node, and the depth node. Therefore, the dTOF algorithm may obtain the metadata in the raw image through parsing based on the obtained raw image, and perform parsing processing on the metadata to determine the current voltage regulation level of the SPAD. As shown in FIG. 8, in terms of hardware, the dTOF algorithm may exchange data with the dTOF sensor by using a mobile industry processor interface (mobile industry processor interface, MIPI), to obtain the raw image collected by the dTOF sensor and further obtain the current voltage regulation level Bvd_current of the SPAD through parsing.

Further, when the SPAD is calibrated, data such as an initial voltage value, an initial voltage regulation level, and a voltage regulation step corresponding to each voltage regulation level that are used when the drive voltage of the SPAD is regulated may be calibrated. In other words, in a possible implementation of this embodiment of this application, the reference data may include a reference drive voltage, a reference voltage level, and a reference voltage regulation step. Correspondingly, the determining the expected drive voltage based on the voltage regulation level and the reference data may include:

determining a current voltage regulation amplitude of the SPAD based on a difference between the voltage regulation level and the reference voltage level and the reference voltage regulation step; and
determining the expected drive voltage based on the reference drive voltage and the voltage regulation amplitude.

The reference drive voltage may be an initial voltage value used when the drive voltage of the SPAD is regulated. The reference voltage level may be an initial voltage level used when the drive voltage of the SPAD is regulated. In addition, the drive voltage value corresponding to the reference voltage level is the reference drive voltage. In other words, if it is determined that the current voltage regulation level of the SPAD is the reference voltage level, it may be determined that the current expected drive voltage of the SPAD is the reference drive voltage.

The reference voltage regulation step may be a changed voltage value of the drive voltage of the SPAD when the drive voltage of the SPAD is regulated by a voltage regulation level. To be specific, if the drive voltage of the SPAD is increased by one voltage regulation level, the drive voltage of the SPAD is increased by one reference voltage regulation step; and if the drive voltage of the SPAD is decreased by one voltage regulation level, the drive voltage of the SPAD is decreased by one reference voltage regulation step.

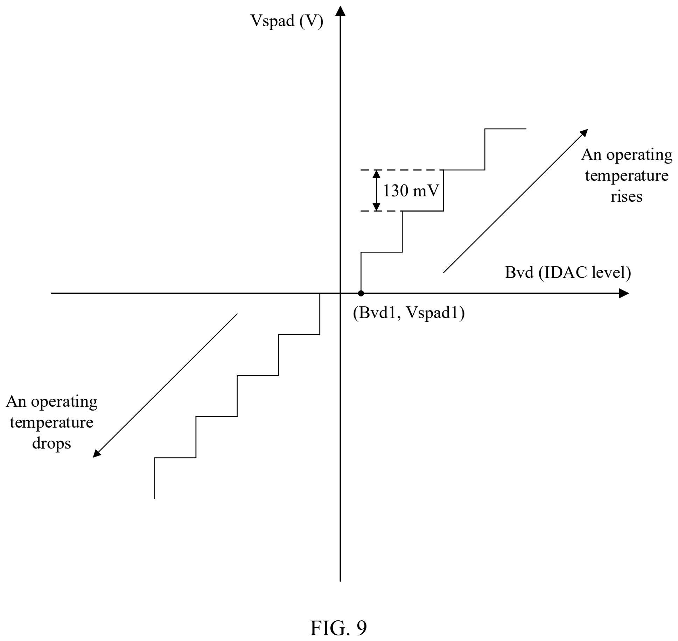

For example, FIG. 9 is a diagram of a relationship between a drive voltage of a SPAD and a voltage regulation level according to an embodiment of this application. A horizontal axis represents the voltage regulation level Bvd (that is, an IDAC level) of the SPAD, a vertical axis represents the drive voltage Vspad of the SPAD, a unit is volt (V), the reference drive voltage is Vspad1, the reference voltage level is Bvd1, and the reference voltage regulation step is 130 mV. If the drive voltage of the SPAD is increased by one voltage regulation level, the drive voltage of the SPAD is increased by 130 mV. If the drive voltage of the SPAD is decreased by one voltage regulation level, the drive voltage of the SPAD is decreased by 130 mV. In addition, it can be learned from the figure that when the operating temperature increases, both the drive voltage and the voltage regulation level of the SPAD rises, and when the operating temperature drops, both the drive voltage and the voltage regulation level of the SPAD decrease.

In a possible implementation, a difference between the current voltage regulation level of the SPAD and the reference voltage level may be determined as a current expected regulation level quantity, a product of the current expected regulation level quantity and the reference voltage regulation step is determined as the current voltage regulation amplitude of the SPAD, and further a sum of the reference drive voltage and the current voltage regulation amplitude of the SPAD is determined as the expected drive voltage.

As shown in FIG. 8, the expected drive voltage may be determined by using the following formula:

$$Vspad\_calc = Vspad1 + (Bvd\_current - Bvd1) \times Bvd\_LSB$$

Herein, Vspad_calc is the expected drive voltage, Vspad1 is the reference drive voltage, Bvd1 is the reference voltage level, Bvd_current is the current voltage regulation level of the SPAD, and Bvd_LSB is the reference voltage regulation step.

Through the foregoing analysis, in this embodiment of this application, by pre-calibrating the reference drive voltage corresponding to the SPAD, the reference voltage level, and the reference voltage regulation step corresponding to each voltage level, the reference data for regulating the drive voltage of the SPAD is determined in advance, then the expected regulation level quantity may be determined based on a difference between a real-time voltage regulation level and the reference voltage level, a voltage amplitude that needs to be regulated is determined based on the expected regulation level quantity and the reference voltage regulation step, that is, the current voltage regulation amplitude of the SPAD, and finally voltage regulation may be performed based on the voltage regulation amplitude on the basis of the reference drive voltage to determine the current expected drive voltage of the SPAD, thereby ensuring accuracy of determining the theoretical value of the drive voltage of the SPAD, further improving accuracy of a depth step, and further improving distance measurement accuracy of the dTOF sensor.

Step 204: Perform depth compensation on the raw image data based on the real drive voltage and the expected drive voltage, to generate the target depth map.

In a possible implementation, because the deviation of the depth information collected by the dTOF sensor is caused due to an error between the real value and the theoretical value of the drive voltage of the SPAD, it may be determined based on the difference between the current real drive voltage of the SPAD and the expected drive voltage to apply a depth compensation policy to the raw image data, to eliminate a depth deviation caused due to the error between the real value and the theoretical value of the drive voltage of the SPAD, thereby improving accuracy of the depth information collected by the dTOF sensor and further improving distance measurement accuracy of the dTOF.

Further, the deviation of the depth information caused due to a regulation error of the drive voltage may be quantized based on the difference between the real value and the theoretical value of the drive voltage of the SPAD, to further improve compensation accuracy of the depth information. In other words, in a possible implementation of this embodiment of this application, step 204 may include:

determining a current drive voltage regulation error of the SPAD based on the difference between the real drive voltage and the expected drive voltage; and

performing depth compensation on the raw image data based on the drive voltage regulation error to generate the target depth map.

In a possible implementation, the difference between the current real drive voltage of the SPAD and the expected drive voltage may be determined as the current drive voltage regulation error of the SPAD. Then, a depth value error corresponding to the drive voltage regulation error may be determined based on a conversion relationship between a drive voltage regulation error and a depth value. Further, depth compensation is performed on the raw image data based on the depth value error, to generate the target depth map.

Further, the conversion relationship between the voltage regulation error of the SPAD and the depth deviation may be pre-calibrated, to further improve accuracy of depth compensation. In other words, in a possible implementation of this embodiment of this application, the performing depth compensation on the raw image data based on the drive voltage regulation error to generate the target depth map may include:

determining, based on the drive voltage regulation error and a preset conversion ratio, a depth value error corresponding to the raw image data; and

performing depth compensation on the raw image data based on the depth value error to generate the target depth map.

The preset conversion ratio may be a pre-calibrated ratio of a depth value error and a drive voltage regulation error. For example, if the preset conversion ratio is 0.08 mm/mV, it may indicate that a voltage regulation error of each 1 mV causes a depth value error of 0.08 mm.

In a possible implementation, the conversion relationship between the voltage regulation error of the SPAD and the depth deviation may be pre-calibrated, to determine the conversion ratio between a drive voltage regulation error and the depth value error as the preset conversion ratio. Therefore, after the current drive voltage regulation error of the SPAD is determined, a product of the current drive voltage regulation error of the SPAD and the preset conversion ratio may be determined as the depth value error corresponding to the raw image data, and further, each depth value corresponding to the raw image data may be compensated based on the depth value error to generate the target depth map. For example, after the depth value error is determined, for a depth value corresponding to the raw image data, a sum of the depth value and the depth value error may be determined as the target depth value corresponding to the depth value. By analogy, each target depth value corresponding to the raw image data may be determined to generate the target depth map.

As an example, as shown in FIG. 8, depth compensation may be performed on the raw image data by using the following formula:

$$\text{Tof\_cali}=\text{Tof\_Raw}+(\text{Vspad\_real}-\text{Vspad\_calc})\times\text{ratio\_Tof\_VSPAD}.$$

Herein, Tof_cali is the target depth map, Tof_Raw is the raw depth map corresponding to the raw image data, Vspad_real is the current real drive voltage of the SPAD, Vspad_calc is the current expected drive voltage of the SPAD, and ratio_Tof_VSPAD is the preset conversion ratio, for example, ratio_Tof_VSPAD=0.08 mm/mV.

For example, it is assumed that atio_Tof_VSPAD=0.08 mm/mV, and Vspad_real-Vspad_calc=100 mV, that is, the current drive voltage regulation error of the SPAD is 100 mV, it may be determined that the depth value error corresponding to the raw image data is 8 mm, so that 8 mm can be compensated for each depth value corresponding to the raw image data to generate a target depth map.

Through the foregoing analysis, in this embodiment of this application, the depth value error caused due to the deviation is compensated based on the deviation between the real value and the theoretical value of the drive voltage of the SPAD, thereby improving accuracy of the depth information collected by the dTOF sensor and further improving distance measurement accuracy of the dTOF sensor.

Further, when the raw image data collected by the dTOF sensor includes the raw histogram and the metadata corresponding to the raw histogram, the raw depth map may be first generated based on the raw histogram, and then depth compensation may be performed on the raw depth map, to further improve accuracy of depth compensation. In other words, in a possible implementation of this embodiment of this application, step 204 may include:

generating the raw depth map based on the raw histogram; and
performing depth compensation on the raw depth map based on the real drive voltage and the expected drive voltage, to generate the target depth map.

In a possible implementation, as shown in FIG. 1, the depth node in the hardware abstraction layer may perform parsing processing on the raw image data obtained from the dTOF sensor to determine the raw histogram in the raw image data, and then send the raw histogram to the dTOF algorithm. Then, the dTOF algorithm may generate the raw depth map based on the raw histogram, and then perform depth compensation on the raw depth map based on the current real drive voltage of the SPAD and the expected drive voltage, to generate the target depth map.

It should be noted that a specific manner of performing depth compensation on the raw depth map based on the current real drive voltage of the SPAD and the expected drive voltage may be the same as that in the foregoing embodiment. Details are not described herein again.

Through the foregoing analysis, in this embodiment of this application, the raw depth map is generated based on the raw histogram collected by the dTOF sensor, and depth compensation is performed on the depth information in the raw depth map based on the deviation between the real drive voltage of the SPAD and the expected drive voltage, thereby further improving accuracy of depth compensation and further improving distance measurement accuracy of the dTOF.

Further, when the depth compensation method of the dTOF sensor in this embodiment of this application is applied to a shooting scenario, the depth map obtained after compensation may be used for autofocus, to further improve autofocus effect. In a possible implementation of this embodiment of this application, after step 204, the method may further include:

in a shooting process, performing focusing processing based on the target depth map.

In a possible implementation, after the depth information collected by the dTOF sensor is compensated, an accurate distance between a measured object and the electronic device may be determined based on the target depth map. Therefore, as shown in FIG. 1, the dTOF algorithm may send the target depth map generated after compensation to the autofocus node. In this way, the autofocus node determines the accurate distance between the electronic device and the measured object based on the target depth map, and performs autofocus processing based on an accurate distance measurement result, to further improve autofocus effect during shooting and improve image shooting quality, thereby further improving user experience.

In the depth compensation method of the dTOF sensor provided in this embodiment of this application, depth compensation is performed, based on the current real drive voltage of the SPAD and the expected drive voltage, on the raw image data collected by the dTOF sensor. Therefore, the depth information deviation caused by the regulation error of the drive voltage of the SPAD is corrected based on the deviation between the real value and the theoretical value of the drive voltage of the SPAD, to improve accuracy of the depth information collected by the dTOF sensor, thereby improving distance measurement accuracy of the dTOF sensor.

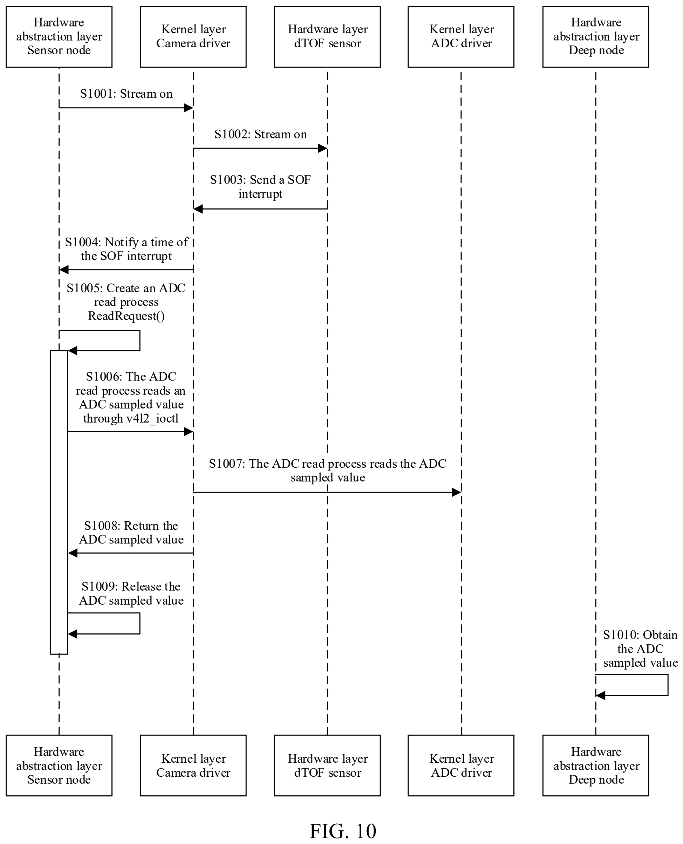

FIG. 10 is a time-sequence diagram of a depth compensation method of a dTOF sensor according to an embodiment of this application.

As shown in FIG. 10, the time-sequence diagram of the depth compensation method of the dTOF sensor relates to a sensor node in a hardware abstraction layer in a software system, a camera driver in a kernel layer, a dTOF sensor in a hardware layer, an ADC driver in the kernel layer, and a depth node in the hardware abstraction layer. The following steps are specifically included.

S1001: The sensor node in the hardware abstraction layer streams on (streamOn) to the camera driver in the kernel layer.

S1002: The camera driver in the kernel layer streams on (streamOn) to the dTOF sensor in the hardware layer.

S1003: The dTOF sensor in the hardware layer sends a SOF interrupt to the camera driver in the kernel layer after a frame is output.

S1004: The camera driver in the kernel layer notifies the sensor node in the hardware abstraction layer of a time of the SOF interrupt.

S1005: The sensor node in the hardware abstraction layer creates an ADC read process ReadRequest().

S1006: The sensor node in the hardware abstraction layer reads an ADC sampled value from the camera driver by using v412_ioctl through the ADC read process.

S1007: The camera driver in the kernel layer reads the ADC sampled value from the ADC driver through the ADC read process.

S1008: The camera driver in the kernel layer returns the ADC sampled value to the sensor node in the hardware abstraction layer.

S1009: The sensor node in the hardware abstraction layer releases the ADC sampled value.

S1010: The depth node in the hardware abstraction layer obtains, by using getAdcValue(), the ADC sampled value released by the sensor node.

It should be noted that for a specific implementation process and principle of each step in the time-sequence diagram, reference may be made to the detailed description of the foregoing embodiment. Details are not described herein again.

It should be understood that the order of the sequence numbers of the steps in the foregoing embodiments does not mean the order of execution, and the execution order of each process is determined based on functions and internal logic of the process, and should not be construed as any limitation on the implementation process of embodiments of this application.

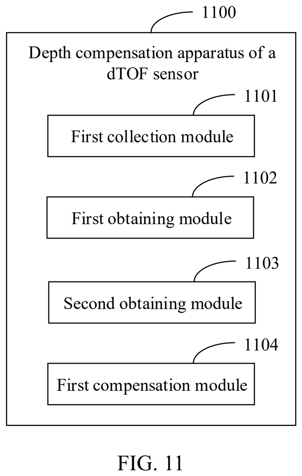

Corresponding to the depth compensation method of the dTOF sensor described in the foregoing embodiment, FIG. 11 shows a block diagram of a structure of a depth compensation apparatus of a dTOF sensor according to an embodiment of this application. For ease of description, only a part related to embodiment of this application is shown.

With reference to FIG. 11, the apparatus 1100 includes:

a first collection module 1101, configured to: in response to a trigger operation for a camera application, drive a dTOF sensor to collect raw image data;

a first obtaining module 1102, configured to obtain a current real drive voltage of a SPAD in the dTOF sensor;

a second obtaining module 1103, configured to obtain a current expected drive voltage of the SPAD; and

a first compensation module 1104, configured to perform depth compensation on the raw image data based on the real drive voltage and the expected drive voltage, to generate a target depth map.

In actual use, the depth compensation apparatus of the dTOF sensor provided in this embodiment of this application may be configured in any electronic device, to execute the depth compensation method of the dTOF sensor.

In the depth compensation apparatus of the dTOF sensor provided in this embodiment of this application, depth compensation is performed, based on the current real drive voltage of the SPAD and the expected drive voltage, on the raw image data collected by the dTOF sensor. Therefore, a depth information deviation caused by a regulation error of the drive voltage of the SPAD is corrected based on a deviation between a real value and a theoretical value of the drive voltage of the SPAD, to improve accuracy of the depth information collected by the dTOF sensor, thereby improving distance measurement accuracy of the dTOF sensor.

In a possible implementation of this application, the apparatus 1100 further includes:

a focusing module, configured to: in a shooting process, perform focusing processing based on the target depth map.

Further, in another possible implementation of this application, the raw image data includes a raw histogram and metadata corresponding to the raw histogram. Correspondingly, the first compensation module 1104 includes:

a first generation unit, configured to generate a raw depth map based on the raw histogram; and

a first compensation unit, configured to perform depth compensation on the raw depth map based on the real drive voltage and the expected drive voltage, to generate the target depth map.

Further, in still another possible implementation of this application, the first obtaining module 1102 includes:

a first sampling unit, configured to sample an output voltage of a power supply corresponding to the SPAD, to obtain the real drive voltage.

Further, in yet another possible implementation of this application, the first sampling unit is specifically configured to:

when obtaining a start of frame SOF interrupt sent by the dTOF sensor, create an ADC read thread;

perform ADC sampling on the output voltage of the power supply by using the ADC read thread, to obtain a current ADC sampled value corresponding to the output voltage of the power supply; and

release the current ADC sampled value, and determine the real drive voltage based on the ADC sampled value.

Further, in yet another possible implementation of this application, the second obtaining module 1103 includes:

a first determining unit, configured to perform parsing processing on the raw image data to determine a current voltage regulation level of the SPAD;
a first obtaining unit, configured to obtain reference data corresponding to the SPAD; and
a second determining unit, configured to determine the expected drive voltage based on the voltage regulation level and the reference data.

Further, in another possible implementation of this application, the raw image data includes a raw histogram and metadata corresponding to the raw histogram. Correspondingly, the first determining unit is specifically configured to: perform parsing processing on the metadata to determine the voltage regulation level.

Optionally, in still another possible implementation of this application, the reference data includes a reference drive voltage, a reference voltage level, and a reference voltage regulation step. Correspondingly, the second determining unit is specifically configured to:

determine a current voltage regulation amplitude of the SPAD based on a difference between the voltage regulation level and the reference voltage level and the reference voltage regulation step; and
determine the expected drive voltage based on the reference drive voltage and the voltage regulation amplitude.

Further, in yet another possible implementation of this application, the first compensation module 1104 further includes:

a third determining unit, configured to determine a current drive voltage regulation error of the SPAD based on a difference between the real drive voltage and the expected drive voltage; and
a second compensation unit, configured to perform depth compensation on the raw image data based on the drive voltage regulation error to generate the target depth map.

Further, in yet another possible implementation of this application, the second compensation unit is specifically configured to:

determine, based on the drive voltage regulation error and a preset conversion ratio, a depth value error corresponding to the raw image data; and
perform depth compensation on the raw image data based on the depth value error to generate the target depth map.

It should be noted that content such as information exchange or an execution process between the apparatuses/units is based on a same concept as that in the method embodiments of this application. Therefore, for specific functions and technical effects brought by the apparatuses/units, refer to the method embodiment parts. Details are not described herein again.

Persons skilled in the art may clearly understand that, for ease and brevity of description, division of the foregoing functional units and modules is merely used as an example for description. In actual application, the foregoing functions may be allocated to different functional units and modules based on a requirement, that is, an internal structure of the apparatus is divided into different functional units or modules, to complete all or some of the functions described above. The functional units or modules in embodiments may be integrated into one processing unit, each unit may exist alone physically, or two or more units are integrated into one unit. The foregoing integrated unit may be implemented in a form of hardware, or may be implemented in a form of a software functional unit. In addition, specific names of functional units and modules are only for the convenience of distinguishing between each other, and are not used to limit the protection scope of this application. For specific working processes of the units and modules in the system, refer to the corresponding processes in the foregoing method embodiments. Details are not described herein again.

To implement the foregoing embodiments, this application further provides an electronic device.

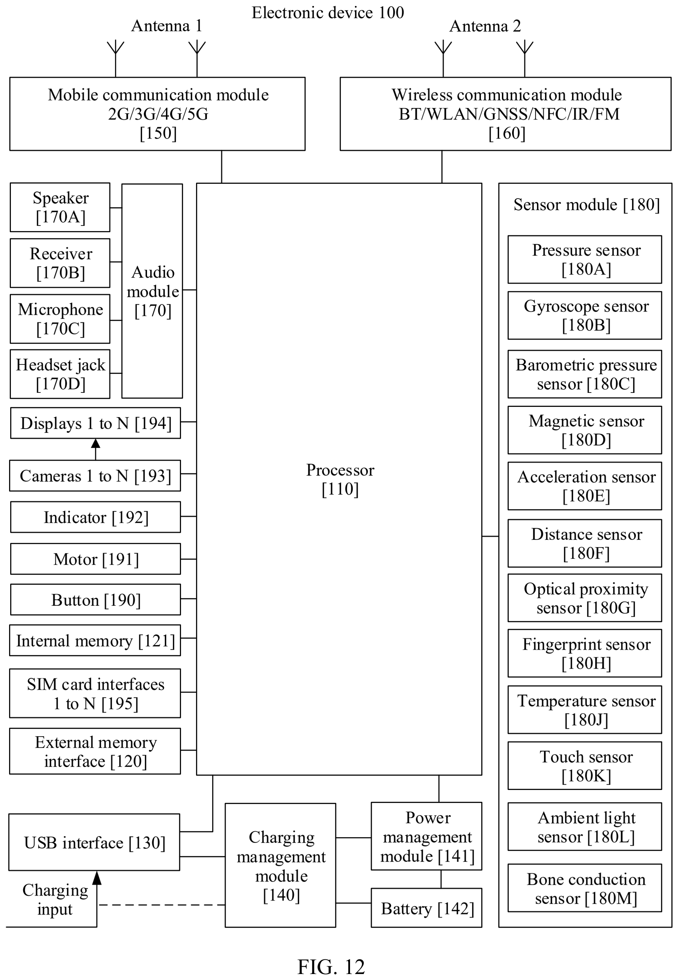

FIG. 12 is a diagram of a structure of an electronic device according to an embodiment of this application.

With reference to FIG. 12, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It can be understood that a structure illustrated in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may also be disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly invoke the instructions or the data from the memory. This avoids repeated access, and reduces a waiting time of the processor 110, thereby improving system efficiency.

In some embodiments, the processor 110 may include one or more interfaces, for example, may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and a universal serial bus (universal serial bus, USB) interface.

It may be understood that an interface connection relationship between the modules illustrated in this embodiment of this application is merely an example for description, and does not constitute a limitation on a structure of the electronic device 100. In some other embodiments of this application, the electronic device 100 may use an interface connection manner different from that in the above embodiments, or use combinations of a plurality of interface connection manners.

The electronic device 100 may implement a display function by using the GPU, the display 194, the application processor, and the like. The GPU is a microprocessor for image processing and connects the display 194 to the application processor. The GPU is configured to perform mathematical and geometric computation for graphics rendering. The processor 110 may include one or more GPUs that execute program instructions to generate or change display information.

The display 194 is configured to display an image, a video, and the like. The display 194 may include a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), and the like. In some embodiments, the electronic device 100 may include 1 or N displays 194, where N is a positive integer greater than 1.

The electronic device 100 may implement a shooting function through the camera 193, the ISP, the video codec, the GPU, the display 194, the application processor, and the like.

The ISP is configured to process data fed back by the camera 193. For example, during shooting, a shutter is opened, light is transmitted to a camera photosensitive element by using a lens, an optical signal is converted into an electrical signal, and the camera photosensitive element transmits the electrical signal to the ISP for processing, to convert the electrical signal into an image visible to a naked eye. The ISP may further optimize an algorithm for noise, brightness, and complexion. The ISP may further optimize parameters such as exposure and a color temperature of a shooting scene. In some embodiments, the ISP may be disposed in the camera 193.

The digital signal processor is configured to process a digital signal, and may process another digital signal in addition to a digital image signal. For example, when the electronic device 100 performs frequency selection, the digital signal processor is configured to perform Fourier transform, and the like on frequency energy.

The video codec is configured to compress or decompress a digital video. The electronic device 100 can support one or more types of video codecs. In this way, the electronic device 100 may play or record videos in a plurality of encoding formats, for example, moving picture experts group (moving picture experts group, MPEG) 1, MPEG2, MPEG3, and MPEG4.

The internal memory 121 may be configured to store computer-executable program code, and the computer-executable program code includes instructions. The processor 110 performs various functional applications and data processing of the electronic device 100 by running the instructions stored in the internal memory 121. The internal memory 121 may include a program storage area and a data storage area. The program storage area may store an operating system, an application program required by at least one function (for example, a sound playback function and an image display function), and the like. The data storage area may store data (such as audio data and a phone book), and the like created when the electronic device 100 is used. In addition, the internal memory 121 may include a high-speed random access memory, and may also include a non-volatile memory, for example, at least one magnetic disk storage device, a flash storage device, or a universal flash storage (universal flash storage, UFS).

The distance sensor 180F is configured to measure a distance. The electronic device 100 may measure a distance in an infrared manner or a laser manner. In some embodiments, in a shooting scene, the electronic device 100 may measure a distance by using the distance sensor 180F, to implement fast focusing. In a possible implementation of this embodiment of this application, the distance sensor 180F may be a dTOF sensor.

It should be noted that for an implementation process and a technical principle of the electronic device in this embodiment, reference may be made to the foregoing explanation and description of the depth compensation method of the dTOF sensor in embodiments of this application. Details are not described herein again.

An embodiment of this application further provides a computer-readable storage medium. The computer-readable storage medium stores a computer program. When the computer program is executed by a processor, the steps in the foregoing method embodiments may be implemented.

An embodiment of this application provides a computer program product, the computer program product, when run on an electronic device, causing the electronic device to implement steps in the above method embodiments.

If an integrated unit is implemented in a form of a software functional unit and sold or used as an independent product, the integrated unit may be stored in a computer-readable storage medium. Based on such an understanding, in this application, all or some of processes in the method in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code. The computer program code may be in a source code form, an object code form, an executable file form, some intermediate forms, or the like. The computer-readable medium may include at least any entity or apparatus that can carry computer program code to a shooting apparatus/-electronic device, a recording medium, a computer memory, a read-only memory (Read-Only Memory, ROM), a random access memory (Random Access Memory, RAM), an electrical carrier signal, a telecommunication signal, and a software distribution medium, for example, a USB flash disk, a mobile hard disk, a magnetic disk, or an optical disk. In some jurisdictions, the computer-readable medium cannot be the electrical carrier signal or the telecommunication signal according to legislation and patent practices.

In the foregoing embodiments, the description of each embodiment has respective focuses. For a part that is not described in detail or recorded in an embodiment, refer to the related description in other embodiments.

In the foregoing embodiments, specific details such as a specific system structure and a technology are proposed for description rather than limitation, to thoroughly understand embodiments of this application. However, persons skilled in the art should know that this application may be practiced in other embodiments without these specific details. In other cases, detailed description of well-known systems, apparatuses, circuits, and methods are omitted, so that this application is described without being obscured by unnecessary details.

It should be understood that the term "include" used in the specification and the appended claims of this application indicates presence of the described feature, entirety, step, operation, element, and/or component, but does not exclude presence or addition of one or more other features, entireties, steps, operations, elements, components, and/or sets thereof.

It should also be understood that the term "and/or" used in the specification and the appended claims of this application indicates any combination and all possible combinations of one or more associated listed items, and includes these combinations.

As used in the specification and the appended claims of this application, the term "if" may be interpreted as "when", "once", "in response to determining", or "in response to detecting" based on the context. Likewise, the phrase "if it is determined that" or "if [a described condition or event] is detected" may be interpreted as a meaning of "once it is determined that", "in response to determining", "once [a described condition or event] is detected", or "in response to detecting [a described condition or event]" based on the context.

In addition, in the description of the specification and the appended claims of this application, the terms "first", "second", "third", and the like are merely intended for a purpose of differentiated description, but shall not be understood as an indication or an implication of relative importance.

Reference to "one embodiment" or "some embodiments" described in this specification of this application means that a specific characteristic, structure, or feature described in combination with the embodiment is included in one or more embodiments of this application. Therefore, statements "in one embodiment", "in some embodiments", "in some other embodiments", "in some additional embodiments", and the like described in different parts in this specification do not necessarily mean the same embodiment, but mean "one or more but not all embodiments", unless otherwise specifically emphasized in other manners. The terms "include", "comprise", "have", and their variants all mean "include but are not limited to", unless otherwise specifically emphasized.

Persons of ordinary skill in the art may be aware that the exemplary units and algorithm steps described with reference to embodiments disclosed in this specification can be implemented in electronic hardware, or a combination of computer software and electronic hardware. Whether these functions are performed by hardware or software depends on particular applications and design constraints of the technical solutions. Persons skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be at one location or may be distributed on a plurality of network units. Some or all of the units may be selected according to actual requirements to achieve the objectives of the solutions of embodiments.

The foregoing embodiments are merely used to describe the technical solutions of this application, instead of limiting the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the spirit and scope of the technical solutions in embodiments of this application, and shall fall within the protection scope of this application.

**Claims**

1. A depth compensation method of a direct time of flight dTOF sensor, comprising:

   in response to a trigger operation for a camera application, driving the dTOF sensor to collect raw image data;
   obtaining a current real drive voltage of a single-photon avalanche diode SPAD in the dTOF sensor;
   obtaining a current expected drive voltage of the SPAD; and
   performing depth compensation on the raw image data based on the real drive voltage and the expected drive voltage, to generate a target depth map.

2. The method according to claim 1, wherein performing depth compensation on the raw image data based on the real drive voltage and the expected drive voltage, to generate the target depth map further comprises:
   in a shooting process, performing focusing processing based on the target depth map.

3. The method according to claim 1, wherein the raw image data comprises a raw histogram and metadata corresponding to the raw histogram, and performing depth compensation on the raw image data based on the real drive voltage and the expected drive voltage, to generate the target depth map further comprises:

   generating a raw depth map based on the raw histogram; and
   performing depth compensation on the raw depth map based on the real drive voltage and the expected drive voltage, to generate the target depth map.

4. The method according to claim 1, wherein obtaining the current real drive voltage of the SPAD in the dTOF sensor comprises:
   sampling an output voltage of a power supply corresponding to the SPAD, to obtain the real drive voltage.

5. The method according to claim 4, wherein sampling the output voltage of the power supply corresponding to the SPAD, to obtain the real drive voltage comprises:

when obtaining a start of frame SOF interrupt sent by the dTOF sensor, creating an analog-to-digital conversion ADC read thread;
performing ADC sampling on the output voltage of the power supply by using the ADC read thread, to obtain a current ADC sampled value corresponding to the output voltage of the power supply; and
releasing the current ADC sampled value, and determining the real drive voltage based on the ADC sampled value.

6. The method according to claim 1, wherein obtaining the current expected drive voltage of the SPAD comprises:

performing parsing processing on the raw image data to determine a current voltage regulation level of the SPAD;
obtaining reference data corresponding to the SPAD; and
determining the expected drive voltage based on the voltage regulation level and the reference data.

7. The method according to claim 6, wherein the raw image data comprises a raw histogram and metadata corresponding to the raw histogram, and performing parsing processing on the raw image data to determine the current voltage regulation level of the SPAD comprises:
performing parsing processing on the metadata to determine the voltage regulation level.

8. The method according to claim 6, wherein the reference data comprises a reference drive voltage, a reference voltage level, and a reference voltage regulation step, and determining the expected drive voltage based on the voltage regulation level and the reference data comprises:

determining a current voltage regulation amplitude of the SPAD based on a difference between the voltage regulation level and the reference voltage level and the reference voltage regulation step; and
determining the expected drive voltage based on the reference drive voltage and the voltage regulation amplitude.

9. The method according to any one of claims 1 to 8, wherein performing depth compensation on the raw image data based on the real drive voltage and the expected drive voltage, to generate the target depth map comprises:

determining a current drive voltage regulation error of the SPAD based on a difference between the real drive voltage and the expected drive voltage; and
performing depth compensation on the raw image data based on the drive voltage regulation error to generate the target depth map.

10. The method according to claim 9, wherein performing depth compensation on the raw image data based on the drive voltage regulation error to generate the target depth map comprises:

determining, based on the drive voltage regulation error and a preset conversion ratio, a depth value error corresponding to the raw image data; and
performing depth compensation on the raw image data based on the depth value error to generate the target depth map.

11. An electronic device, comprising a memory, a processor, and a computer program that is stored in the memory and that is capable of running on the processor, wherein when the processor executes the computer program, the electronic device implements the method according to any one of claims 1 to 10.

12. A computer-readable storage medium, wherein the computer-readable storage medium stores a computer program, and when the computer program is executed by an electronic device, the method according to any one of claims 1 to 10 is implemented.

EP 4 741 873 A1

Application layer

Application framework layer

Hardware abstraction layer

Kernel layer

Hardware layer

Camera application

Camera service

dTOF sensor node

Release ADC sampled values

Image front-end lite node

Deep node

Autofocus node

Original histogram

Target depth map

dTOF algorithm

ReadRequest (ADC thread)

Camera driver

streamOn

SOF

dTOF sensor

ADC

FIG. 1

In response to a trigger operation for a camera application, drive a dTOF sensor to collect raw image data — 201

Obtain a current real drive voltage of a SPAD in the dTOF sensor — 202

Obtain a current expected drive voltage of the SPAD — 203

Perform depth compensation on the raw image data based on the real drive voltage and the expected drive voltage, to generate a target depth map — 204

FIG. 2

300

09:09

5G

09:09

Wednesday, March 3

Weather

Calendar

Email

Settings

AppGallery

APP

Notes

Gallery

301

FIG. 3

FIG. 4

FIG. 5

FIG. 6

2560

| Row 1 metadata: temperature, Bvd_current(IDAC), errorFlag, binmode, and the like |
|---|
| Original histogram |

FIG. 7

```
                                            ┌──┐
                                            │  │
                                            └──┘
                                            ┌──┐
                                            │  │
                                            └──┘
┌──────────┐                                           ┌──────────┐
│          │ ◄────────────────────────────────         │          │
│   ADC    │                                            │ dTOF     │
│          │                     ┌──────────┐           │ sensor   │
└────┬─────┘                     │          │           │          │
     │                           │  VSPAD   │  VSPAD     │          │
     │                           │  DCDC    │ ────────►  │          │
     │        ADC thread         │          │ ◄────────  │          │
     │                           └──────────┘   IDAC     └────┬─────┘
     │                                                        │ MIPI
     ▼                                                        ▼
┌────────────────────────────────────────────────────────────────────┐
│ ┌──────────┐         dTOF algorithm              ┌──────────────┐   │
│ │Vspad_real│                                     │ Bvd_current  │   │
│ └──────────┘                                     └──────┬───────┘   │
│                                                         │           │
│   ┌────────────────────────────────────────────────┐   │           │
│   │ Vspad_calc=Vspad1+(Bvd_current-Bvd1)×Bvd_LSB    │   │           │
│   └────────────────────────────────────────────────┘   │           │
│                                                         ▼           │
│                                                  ┌──────────────┐   │
│                                                  │  Vspad_calc  │   │
│                                                  └──────────────┘   │
│                                                                     │
│                                ratio_Tof_VSPAD=0.08 mm/mV           │
│   ┌──────────────────────────────────────────────────────────────┐ │
│   │ Tof_cali=Tof_Raw+(Vspad_real-Vspad_calc)×ratio_Tof_VSPAD      │ │
│   └──────────────────────────────────────────────────────────────┘ │
└────────────────────────────────────────────────────────────────────┘
```

FIG. 8

FIG. 9

| Hardware abstraction layer Sensor node | Kernel layer Camera driver | Hardware layer dTOF sensor | Kernel layer ADC driver | Hardware abstraction layer Deep node |
|---|---|---|---|---|

S1001: Stream on

S1002: Stream on

S1003: Send a SOF interrupt

S1004: Notify a time of the SOF interrupt

S1005: Create an ADC read process ReadRequest()

S1006: The ADC read process reads an ADC sampled value through v4l2_ioctl

S1007: The ADC read process reads the ADC sampled value

S1008: Return the ADC sampled value

S1009: Release the ADC sampled value

S1010: Obtain the ADC sampled value

| Hardware abstraction layer Sensor node | Kernel layer Camera driver | Hardware layer dTOF sensor | Kernel layer ADC driver | Hardware abstraction layer Deep node |
|---|---|---|---|---|

FIG. 10

1100

Depth compensation apparatus of a
dTOF sensor

1101

First collection module

1102

First obtaining module

1103

Second obtaining module

1104

First compensation module

FIG. 11

Electronic device 100

FIG. 12

## INTERNATIONAL SEARCH REPORT

| | International application No. |
|---|---|
| | **PCT/CN2024/106339** |

**A. CLASSIFICATION OF SUBJECT MATTER**

G01S7/497(2006.01)i

According to International Patent Classification (IPC) or to both national classification and IPC

**B. FIELDS SEARCHED**

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNABS, CNTXT, VEN, CNKI: TOF, 驱动电压, 驱动电流, 实际, 期望, 深度补偿, 深度修正, 深度校正, SPAD, driving voltage, driving current, actual, desired, depth, compensat+, correct+

**C. DOCUMENTS CONSIDERED TO BE RELEVANT**

| Category* | Citation of document, with indication, where appropriate, of the relevant passages | Relevant to claim No. |
|---|---|---|
| A | WO 2018049791 A1 (ZTE CORP.) 22 March 2018 (2018-03-22) <br> description, page 2, line 6-last line, and page 6, line 16-page 10, line 25, and figure 2 | 1-12 |
| A | CN 108324398 A (RWD LIFE SCIENCE CO., LTD.) 27 July 2018 (2018-07-27) <br> entire document | 1-12 |
| A | CN 112419427 A (TIANJIN UNIVERSITY OF TECHNOLOGY) 26 February 2021 (2021-02-26) <br> entire document | 1-12 |
| A | CN 113506351 A (VIVO MOBILE COMMUNICATION (HANGZHOU) CO., LTD.) 15 October 2021 (2021-10-15) <br> entire document | 1-12 |
| A | KR 20170088259 A (SAMSUNG ELECTRONICS CO., LTD.) 01 August 2017 (2017-08-01) <br> entire document | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 November 2024** | **06 November 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/106339**

| Patent document cited in search report | | | Publication date (day/month/year) | Patent family member(s) | | | Publication date (day/month/year) |
|---|---|---|---|---|---|---|---|
| WO | 2018049791 | A1 | 22 March 2018 | None | | | |
| CN | 108324398 | A | 27 July 2018 | None | | | |
| CN | 112419427 | A | 26 February 2021 | None | | | |
| CN | 113506351 | A | 15 October 2021 | None | | | |
| KR | 20170088259 | A | 01 August 2017 | KR | 102460659 | B1 | 28 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311440945